# EUROPÄISCHE PATENTANMELDUNG

(11) **EP 1 327 869 A1**
(43) Veröffentlichungstag der Anmeldung: **16.07.2003**
(21) Anmeldenummer: 02028306.5
(22) Anmeldetag: 17.12.2002
(51) Int. Cl.: G01K 7/02

(54) **Temperatursensor**

(30) Priorität: 09.01.2002 DE 10200558
(71) Anmelder: ROBERT BOSCH GMBH, 70442 Stuttgart (DE)
(72) Erfinder: Pannek, Thorsten, 70176 Stuttgart (DE)

(57) **Zusammenfassung**

Es wird Temperatursensor (5) vorgeschlagen, der insbesondere zur berührenden Erfassung schneller Temperaturänderungen in Gasen, beispielsweise als Seitenaufpralldetektor in einem Kraftfahrzeug, verwendbar ist. Dazu weist der Temperatursensor (5) eine zumindest bereichsweise freitragende Membran (12) und ein auf der Membran (12) angeordnetes Temperaturmesselement (20) auf, das mit einem Medium in Kontakt ist. Der Temperatursensor (5) ist derart aufgebaut, dass damit eine zumindest näherungsweise instantane oder adiabatische Änderung der Temperatur des Mediums von mindestens 0,5 K innerhalb einer Zeit von weniger als 10 ms durch das Temperaturmesselement (20) erfassbar ist.

## Beschreibung

Die Erfindung betrifft einen Temperatursensor, insbesondere zur berührenden Erfassung schneller Temperaturänderungen in Gasen, nach der Gattung des Hauptanspruches.

### Stand der Technik

Temperatursensoren sind in einer Vielzahl von Ausführungen bekannt und werden in vielen Bereichen des täglichen Lebens verwendet. Dabei unterscheidet man berührende Sensoren wie Thermistoren oder Thermoelemente und nicht berührend messende Sensoren wie beispielsweise in der unveröffentlichten Anmeldung DE 100 33 589.6 beschriebene thermoelektrische Infrarot-Detektoren.

Bei bekannten berührend messenden Temperatursensoren ist nachteilig, dass diese eine hohe Trägheit bzw. Zeitkonstante aufweisen und damit für eine schnelle Detektion von Temperaturänderung ungeeignet sind.

### Vorteile der Erfindung

Der erfindungsgemäße Temperatursensor hat gegenüber dem Stand der Technik den Vorteil, dass er mittels Standardprozessen der Halbleitertechnologie wie Oberflächenmikromechanik oder Bulk-Mikromechanik herstellbar und damit problemlos in Serie bzw. großen Stückzahlen fertigbar ist.

Weiter ist vorteilhaft, dass sich damit sehr schnelle Temperaturänderungen von Gasen, wie sie beispielsweise bei adiabatischen Zustandsänderungen durch Kompression innerhalb von wenigen Millisekunden auftreten, detektieren lassen. Insofern eignet sich der erfindungsgemäße Temperatursensor besonders zur Verwendung in einem Seitenaufpralldetektor in einem Kraftfahrzeug, um damit beispielsweise einen Airbag auszulösen.

Schließlich ist vorteilhaft, dass das Messsignal des Temperatursensors, beispielsweise eine Thermospannung, in seiner zeitlichen Änderung nach einer instantanen Temperatuuränderung zumindest näherungsweise die Charakteristik eines Kondensators aufweist.

Gegenüber einem thermoelektrischen, auf der Detektion emittierter Infrarot-Strahlung basierenden Infrarot-Sensor hat der erfindungsgemäße Temperatursensor den Vorteil, dass er die Temperatur des Mediums berührend erfasst. Zudem bewegen sich Temperatruränderungen aufgrund des geringen Strahlungsflusses bei bekannten, nicht berührend messenden InfrarotSensoren üblicherweise im Bereich von lediglich einigen mK bis ca. 100 mK, so dass diese wegen zunehmender Empfindlichkeitseinbußen in der Regel nicht weiter miniaturisierbar sind.

Weiter wird zwar auch bei einem mikromechanischen Infrarot-Sensor gemäß DE 100 33 589.6 eine freitragende Membran eingesetzt, diese ist jedoch aufgrund der dort angestrebten möglichst geringen Wärmeleitfähigkeit vom Substrat weitgehend thermisch entkoppelt, was vor allem durch eine entsprechend große Membran mit möglichst niedriger Wärmeleitfähigkeit erreicht wird.

Schließlich ist bei dem erfindungsgemäßen Temperatursensor eine Absorberschicht, wie sie bei Infrarot-Sensorelementen in der Regel erforderlich ist, entbehrlich und sogar nachteilig, da eine von einer solchen "Störquelle" emittierte Strahlung das Messsignal verfälschen kann.

Vorteilhafte Weiterbildungen der Erfindung ergeben sich aus den in den Unteransprüchen genannten Maßnahmen.

So ist besonders vorteilhaft, wenn die zumindest weitgehend freitragende Membran im Vergleich mit dem Tragkörper für die Membran eine möglichst geringe Masse mit möglichst niedriger Gesamtwärmekapazität aufweist, d.h. der Tragkörper ist thermisch gegenüber der Membran möglichst träge ausgeführt. Zudem weist die Membran gegenüber dem Tragkörper bevorzugt eine möglichst hohe spezifische Wärmeleitfähigkeit auf, wobei gleichzeitig darauf zu achten ist, dass eine ausreichende thermische Entkopplung von Membran und Tragkörper erhalten bliebt. Zur weiteren Verringerung der Gesamtwärmekapazität der Membran ist zudem vorteilhaft, wenn diese möglichst dünn ist.

Auf diese Weise erhält man eine sehr schnelle, gegenüber konventionellen berührenden Temperatursensoren wesentlich verbesserte Reaktionszeit bzw. Zeitkonstante des Temperatursensors, so dass dieser innerhalb einer typischen Zeit von einigen Millisekunden, insbesondere weniger als 4 ms, auf Änderungen der Temperatur des Mediums von 0,5 Kelvin oder mehr, insbesondere mehr als 1 K, reagiert und ein entsprechendes Messsignal bereitstellt, das beispielsweise einen Airbag auslöst.

Insgesamt lässt sich über die genannten Parameter die Gesamtwärmekapazität bzw. der Gesamtwärmewiderstandes des Temperatursensors verändern und dessen Zeitkonstante in der Reaktion auf eine Temperaturänderung auf einen gewünschten, in der Regel möglichst niedrigen Wert einstellen. Besonders vorteilhaft ist der Einsatz einer hinsichtlich Fläche und Dicke möglichst kleinen Membran mit möglichst niedriger Gesamtwärmekapazität.

Hinsichtlich einer möglichst präzisen Messung der Temperaturänderung ist vorteilhaft, wenn sich das eigentliche Temperaturmesselement zumindest näherungsweise im Zentrum der Membran befindet.

Bezüglich der Dimension der eingesetzten Membran hat es sich als vorteilhaft herausgestellt, wenn diese in Draufsicht eine Fläche von weniger als 1 mm² aufweist, wobei die Membran jeweils eine bevorzugte Länge und Breite zwischen 100 µm bis 1000 µm sowie eine bevorzugte Dicke zwischen 0,5 µm und 10 µm, insbesondere 1 um bis 3 µm, besitzt.

Als Material für die Membran eignet sich vor allem Silizium, ein Siliziumnitrid, ein Siliziumoxid, ein Siliziumcarbid, ein Siliziumoxidnitrid oder eine Verbindung mit mindestens zwei dieser Materialien.

Hinsichtlich der Erhöhung der Empfindlichkeit des Temperatursensors ist für gewisse Anwendungen vorteilhaft, wenn die Membran mindestens zwei übereinander angeordnete Schichten aus unterschiedlichen Materialien aufweist, wobei bevorzugt eine dieser Schichten eine Siliziumnitridschicht ist, und wobei eine andere dieser Schichten eine bevorzugt dazu benachbarte Siliziumoxidschicht ist.

Weiter ist in einer besonders vorteilhaften Ausgestaltung der Erfindung vorgesehen, dass die Signalwandlung zumindest nahezu ausschließlich über Wärmeleitung und Konvektion und nicht über Wärmestrahlung erfolgt. Dazu weist die Membran auf ihrer dem eigentlichen Temperaturmesselement zugewandten Seite und bevorzugt auch auf ihrer dem Temperaturmesselement abgewandten Seite eine Reflexionsschicht für infrarote Strahlung, beispielsweise eine Goldschicht mit einer Dicke von einigen Nanometern, auf, die eine einfallende infrarote Strahlung mit einer Wellenlänge von vorzugsweise weniger als 14 µm möglichst wenig absorbiert, d. h. gegenüber dieser einen Absorptionskoeffizienten von weniger als 10% aufweist. Alternativ kann die Membran jedoch gegenüber einer einfallenden infraroten Strahlung auch transparent ist.

Um von Zeit zu Zeit die Funktion des Temperatursensorelementes im Rahmen einer Eigentestroutine überprüfen zu können, ist es vorteilhaft, wenn in einer Umgebung des Temperaturmesselementes auf der Membran eine Heizeinrichtung vorgesehen ist, die beispielsweise als Heizwiderstand oder Dünnschichtwiderstand, vorzugsweise aus Platin, Aluminium, Silizium oder Silizium-Germanium, ausgeführt ist. Mit dieser Heizeinrichtung kann in Zusammenwirken mit einer entsprechenden elektronischen Schaltung beispielsweise kurzzeitig eine Beheizung der Membran und damit auch des Temperatursensorelementes auf der Membran vorgenommen werden, so dass die Funktion des Temperatursensorelementes und dessen Reaktionszeit auf eine Temperaturänderung mit Hilfe der elektronischen Schaltung prüfbar bzw. mit Sollwerten vergleichbar ist.

Sofern sich auf der zumindest weitgehend freitragenden Membran ein Temperaturmesselement in Form eines Thermoelementes mit einem ersten und einem zweiten Material befindet, die zumindest punktuell auf der Membran mindestens einen Thermokontakt miteinander bilden, beruht eine von dem Temperatursensor detektierte Änderung der Temperatur des Mediums nicht auf der Messung der Absoluttemperatur des Mediums sondern auf der Detektion der Temperaturänderung, d.h. der Temperatursensor benützt ein differentielles Messverfahren. Falls auch eine Absoluttemperatur des Mediums erfassbar sein soll, ist es vorteilhaft, auf dem Tragkörper außerhalb der von der Membran eingenommenen Fläche ein weiteres Messelement, beispielsweise in Form einer Widerstandsleiterbahn oder eines Dünnschichtwiderstandes, vorzugsweise aus Aluminium, Platin, Silizium oder Silizium-Germanium, vorzusehen, mit dem die Absoluttemperatur des mit dem Temperaturmesselementes in Kontakt stehenden Mediums bestimmbar ist.

### Zeichnungen

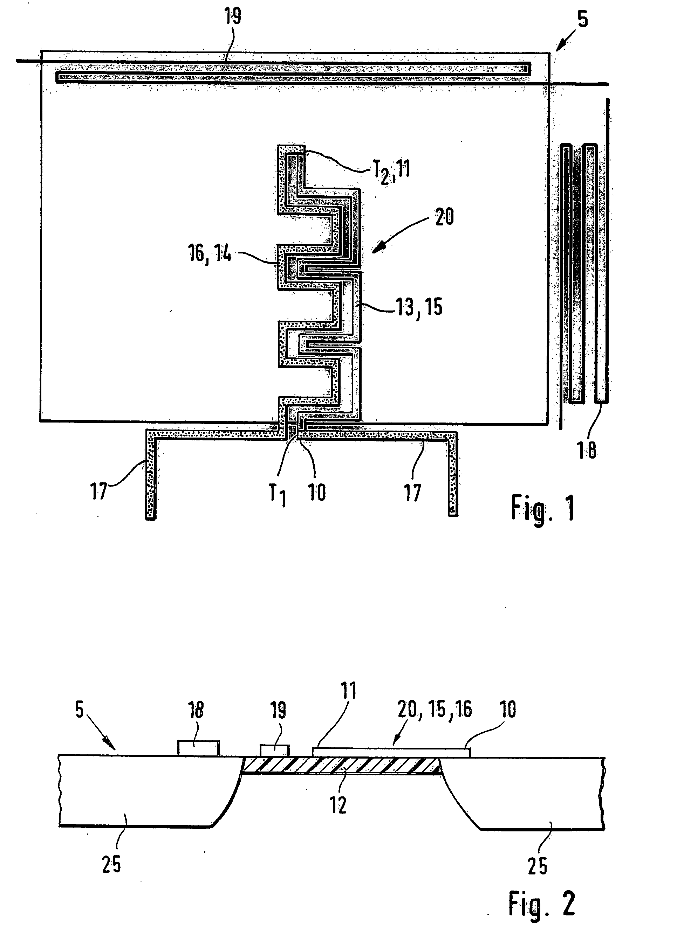

Die Erfindung wird anhand der Zeichnungen und in der nachfolgenden Beschreibung näher erläutert. Es zeigt Figur 1 eine Draufsicht auf einen Temperatursensor und Figur 2 eine Prinzipskizze einer Seitenansicht des Temperatursensors gemäß Figur 1.

### Ausführungsbeispiele

Die Figur 1 zeigt einen Temperatursensor 5, bei dem aus einem Substrat oder Tragkörper 25, der beispielsweise aus Silizium besteht, eine bereichsweise freitragende Membran 12 herausstrukturiert worden ist. Auf der Membran 12 ist eine Heizeinrichtung 19 sowie auf dem Tragkörper 25 außerhalb der von der Membran 12 eingenommenen Fläche ein Messelement 18 angeordnet. Weiter befindet sich auf der Membran 12 ein Temperaturmesselement 20, dass im erläuterten Beispiel in Form eines Thermoelementes ausgeführt ist.

Das Temperaturmesselement 20 weist eine erste Leiterbahn 15 aus einem ersten Material 13 und eine zweite Leiterbahn 16 aus einem zweiten Material 14 auf, die im Bereich des Zentrums der Membran 12 einen zweiten, heißen Thermokontakt 11 miteinander bilden, der im erläuterten Beispiel einer Temperatur T₂ eines mit dem Thermokontakt 11 in Kontakt befindlichen Mediums wie Luft oder einem anderen Gas ausgesetzt ist.

In Figur 1 ist weiter erkennbar, dass die erste Leiterbahn 15 außerhalb der von der Membran 12 eingenommenen Fläche stückweise auf dem Substrat 25 weitergeführt ist und dort in eine Zuleitung 17 übergeht, die beispielsweise in Form einer Platin-Widerstandsleiterbahn ausgeführt ist. Darüber hinaus verläuft auch die zweite Leiterbahn 16 stückweise außerhalb der von der Membran 12 eingenommenen Fläche auf dem Substrat 25 und geht dort ebenfalls in eine Zuleitung 17 über, die beispielsweise aus dem gleichen Material wie die zweite Leiterbahn 16, d.h. aus Platin, besteht.

Insbesondere ist in Figur 1 erkennbar, dass der Übergang der ersten Leiterbahn 15 in die Zuleitung 17, der einen ersten, kalten Thermokontakt 10 definiert, der einer Temperatur T₁ ausgesetzt ist, auf dem Substrat 25, d.h. nicht auf oder im Bereich der von der Membran 12 eingenommenen Fläche, erfolgt.

Auf diese Weise wird erreicht, dass eine Erhöhung der Temperatur T₂ sehr schnell und effektiv erfassbar ist, während eine Änderung der Temperatur T₁ demgegenüber vergleichsweise langsam erfolgt.

Die Figur 2 erläutert Figur 1 im Schnitt, wobei deutlich das Substrat 25 und die weitgehend freitragende Membran 12 mit der darauf aufgebrachten Heizeinrichtung 19 und dem Temperaturmesselement 20 sichtbar ist. Weiter ist erkennbar, dass sich der erste Thermokontakt 10 auf dem Substrat 25 befindet, während der zweite Thermokontakt 11 im Bereich des Zentrums der Membran 12 angeordnet ist. Schließlich ist in Figur 2 auch das auf dem Substrat 25 geführte Messelement 18 dargestellt.

Im Übrigen sei betont, dass auf das Messelement 18 auch verzichtet werden kann, sofern man einen Abschnitt der Zuleitung 17 zu diesem Zwecke nutzt und entsprechend kontaktiert und verschaltet.

Insgesamt liegt im Rahmen des erläuterten Ausführungsbeispiels auf einer dünnen, thermisch von dem Substrat 25 aus Silizium weitgehend entkoppelten Membran 12 ein Thermoelement vor, wobei als Materialpaare für das erste bzw. zweite Material 13, 14 beispielsweise Paare aus den Materialien dotiertes Silizium, Silizium-Germanium, Aluminium, Platin oder auch weiteren thermoelektrischen Materialien ausgewählt werden. Bevorzugt ist das erste Material 13 Silizium-Germanium, und das zweite Material 14 Platin.

Als Material für die Membran 12 eignet sich beispielsweise Silizium, ein Siliziumnitrid (SiₓN_{y}), ein Siliziumoxid (SiₓO_{y}), ein Siliziumoxinitrid (SiₓO_{y}N_{z}) oder ein Siliziumcarbid.

Die Zuleitungen 17 sowie die Heizeinrichtung 19 und das Messelement 18 sind bevorzugt in Form von Dünnschichtwiderständen oder Widerstandsleiterbahnen aus Platin ausgeführt. Alternativ zu Platin eignen sich jedoch auch entsprechende Leiterbahnen bzw. Dünnschichtwiderstände aus Aluminium, Silizium oder Silizium-Germanium.

Die Fläche der Membran 12 liegt im erläuterten Beispiel bei ca. 0,5 mm², wobei die Membran 12 eine Länge und Breite von jeweils ca. 700 µm bei einer Dicke von 3 µm aufweist.

Steigt beispielsweise aufgrund einer adiabatischen Zustandsänderung die Temperatur des Mediums, beispielsweise Luft, mit dem der zweite Thermokontakt 11 in Kontakt ist, an, so erwärmt sich aufgrund der geringen Wärmekapazität der Membran 12 gegenüber der Wärmekapazität des Substrates 25 diese vergleichsweise schnell. Insofern entsteht eine Temperaturdifferenz (ΔT = T₂-T₁) und eine entsprechende Differenz der Thermospannungen in dem Thermoelement 20, d.h. einer zunächst zumindest näherungsweise instantanen Temperaturänderung des Mediums folgt zumindest näherungsweise linear ein elektrisches Signal, dass die Erhöhung der Temperatur des Mediums wiedergibt.

In einer weiteren Ausgestaltung der Erfindung ist vorgesehen, dass die Membran 12 in Form von zwei benachbart übereinander angeordneten Schichten ausgeführt ist, wobei sich unter dem Temperaturmesselement 20 zunächst eine Siliziumnitridschicht befindet, und unter dieser eine Siliziumoxidschicht vorgesehen ist.

In bevorzugter Ausgestaltung ist weiter auf der Unterseite und der Oberseite der Membran 20 jeweils ganzflächig eine in Figur 2 nicht dargestellte Reflexionsschicht für infrarote Strahlung, beispielsweise eine Goldschicht mit einer Dicke von einigen Nanometern, vorgesehen, die auf der Oberseite auch das Messelement 18, die Heizeinrichtung 19 und das Temperaturmesselement 20 flächig überdeckt. Diese Schicht bewirkt überdies eine verbesserte Wärmeleitung und eine Passivierung der Membran 12.

Im Übrigen sei noch erwähnt, dass der Temperatursensor 5 gemäß dem erläuterten Ausführungsbeispiel bevorzugt im Temperaturbereich von -100°C bis 700°C einsetzbar ist.

Alternativ zu dem Thermoelement als Temperaturmesselement 20 gemäß Figur 1 kann das Temperaturmesselement 20 auch als Dünnschichtwiderstand, insbesondere in Form einer Leiterbahn, beispielsweise aus Platin, Silizium, Aluminium oder Silizium-Germanium, sowie auch als pn-Diode oder pn-Übergang ausgeführt sein. Diese Ausführungsform haben gegenüber einem Thermoelement den Vorteil, dass damit auch eine Messung der Absoluttemperatur des Mediums möglich ist, so dass auf das Messelement 18 verzichtet werden kann.

Schließlich können abweichend von Figur 1 auch mehrere Thermoelemente bzw. Temperaturmesselemente 20 auf der Membran 12 vorgesehen sein, die dann beispielsweise gerade oder mäanderförmig ausgeführt und vorzugsweise zur Erhöhung des Messsignals in Reihe geschaltet und/oder an allen Seitenkanten der als thermisch gegenüber dem Substrat 25 entkoppelter Bereich dienenden Membran 12 angeordnet sind.

Als Kriterium, ob der beschriebene Temperatursensor 5 auf eine zumindest näherungsweise instantane oder adiabatische Änderung der Temperatur des Mediums von der Temperatur T₁ auf die Temperatur T₂ von beispielsweise 5 K mit der gewünschten Schnelligkeit reagiert, wird beispielsweise die an dem als Thermoelement ausgeführten Temperaturmesselement 20 detektierte Thermospannung ausgehend von einer Gleichgewichtssituation (T₂ = T₁) und einen nachfolgenden Temperatursprung aufgenommen, die zunächst ähnlich einem sich aufladenden Kondensator als Funktion der Zeit von einem Ausgangswert oder Null ansteigt, bevor sich durch einen allmählichen Ausgleich der Temperaturen T₂ und T₁ der Gleichgewichtszustand wieder einstellt. Näherungsweise verläuft die Thermospannung dabei zunächst entsprechend der Gleichung U(t) = U₀(1-e^{t/τ}), wobei τ die Zeitkonstante des Temperatursensors 5 definiert und t die Zeit nach der instantanen Erhöhung der Temperatur des Mediums ist. Bei dem erläuterten Temperatursensor 5 beträgt die Zeitkonstante τ weniger als 10 Millisekunden, insbesondere weniger als 4 Millisekunden.

Hinsichtlich des Verfahrens zur Herstellung des Temperatursensor 5 sind aus dem Stand der Technik verschiedene Methoden bekannt.

So kann eine thermische Entkopplung der Membran 12 gegenüber dem Substrat 25 über die Erzeugung einer Kaverne unterhalb der Membran erfolgen, wobei die Kaverne dann mit Luft oder einem Füllgas gefüllt ist oder dort ein Vakuum vorliegt.

Die Erzeugung einer solchen Kaverne erfolgt beispielsweise über rückseitiges Freiätzen der Membran 12 mittels nasschemischer Ätzprozesse oder auch über sogenanntes "Reactive Ion Etching" (RIE) bzw. "Advanced Silicon Etching" (ASE).

Daneben kann zur Erzeugung einer Kaverne bzw. der Membran 12 auch eine Opferschichttechnologie eingesetzt werden, wobei unterhalb der zu erzeugenden Membran 12 zunächst eine Opferschicht, beispielsweise aus einem Siliziumoxid (SiₓO_{y}), Germanium oder Silizium-Germanium (SiₓGe₍₁₋ₓ₎) erzeugt wird, die danach durch Löseöffnungen in der Membran 12 im gewünschten Membranbereich wieder entfernt wird.

Eine Variante der Opferschichttechnologie ist die sogenannten poröse Silizium-Technologie, bei der zunächst das Silizium des Substrates 25 im gewünschten Membranbereich über ein elektrochemisches Ätzverfahren porösifiziert und gegebenenfalls mittels nachfolgender Oxidation in oxidiertes poröses Silizium überführt wird. Aufgrund der hohen Porosität und der damit verbundenen hohen inneren Oberflächen kann das so erzeugte poröse Silizium dann mit geeigneten Chemikalien, beispielsweise einer Kaliumhydroxid-Lösung bzw. Flusssäure-Lösung beispielsweise gemäß der Lehre von DE 197 52 208 A1 herausgelöst werden.

## Patentansprüche

1. Temperatursensor, insbesondere zur berührenden Erfassung schneller Temperaturänderungen in Gasen, mit einer zumindest bereichsweise freitragenden Membran (12) und einem auf der Membran (12) angeordneten Temperaturmesselement (20), das mit einem Medium in Kontakt ist, **dadurch gekennzeichnet, dass** eine zumindest näherungsweise instantane oder adiabatische Änderung der Temperatur des Mediums von mindestens 0,5 K innerhalb einer Zeit von weniger als 10 ms durch das Temperaturmesselement (20) erfassbar ist.

2. Temperatursensor nach Anspruch 1, **dadurch gekennzeichnet, dass** eine Änderung der Temperatur des Mediums von mindestens 1 K innerhalb einer Zeit von weniger als 4 ms durch das Temperaturmesselement (20) erfassbar ist.

3. Temperatursensor nach Anspruch 1, **dadurch gekennzeichnet, dass** die Membran (12) in Draufsicht eine Fläche von weniger als 1 mm² aufweist, und dass die Membran (12) eine Länge und eine Breite zwischen jeweils 100 µm bis 1000 µm sowie eine Dicke zwischen 0,5 µm und 10 µm besitzt.

4. Temperatursensor nach Anspruch 1, **dadurch gekennzeichnet, dass** die Membran (12) zumindest bereichsweise aus Silizium, einem Siliziumnitrid, einem Siliziumoxid, einem Siliziumcarbid oder einem Siliziumoxidnitrid oder einer Verbindung mit mindestens zwei dieser Materialien besteht.

5. Temperatursensor nach einem der vorangehenden Ansprüche, **dadurch gekennzeichnet, dass** die Membran (12) mit einem diese tragenden Tragkörper (25) verbunden ist, wobei das Material des Tragkörpers (25) eine höhere Gesamtwärmekapazität aufweist als das Material der Membran (12).

6. Temperatursensor nach einem der vorangehenden Ansprüche, **dadurch gekennzeichnet, dass** die Membran (12) mindestens zwei übereinander angeordnete Schichten aus unterschiedlichen Materialien aufweist, wobei eine erste Schicht insbesondere eine Siliziumnitridschicht ist, und wobei eine zweite Schicht insbesondere eine dazu benachbarte Silizumoxidschicht ist.

7. Temperatursensor nach einem der vorangehenden Ansprüche, **dadurch gekennzeichnet, dass** die Membran (12) auf ihrer dem Temperaturmesselement (20) zugewandten Seite und/oder ihrer dem Temperaturmesselement (20) abgewandten Seite eine Reflexionsschicht für infrarote Strahlung, insbesondere eine Goldschicht, aufweist.

8. Temperatursensor nach einem der vorangehenden Ansprüche, **dadurch gekennzeichnet, dass** in einer Umgebung des Temperaturmesselementes (20) auf der Membran (12) eine Heizeinrichtung (19), insbesondere ein Heizwiderstand oder ein Dünnschichtwiderstand aus Platin, Aluminium, Silizium oder Silizium-Germanium, vorgesehen ist, mittels der die Funktion des Temperatursensors (5) hinsichtlich der Detektion von Temperaturänderungen von Zeit zu Zeit prüfbar ist.

9. Temperatursensor nach einem der vorangehenden Ansprüche, **dadurch gekennzeichnet, dass** auf dem Tragkörper (25) außerhalb der von der Membran (12) eingenommenen Fläche ein Messelement (18), insbesondere eine Widerstandsleiterbahn oder ein Dünnschichtwiderstand aus Aluminium, Platin, Silizium oder Silizium-Germanium, vorgesehen ist, mit dem die Absoluttemperatur des mit dem Temperaturmesselement (20) in Kontakt befindlichen Mediums vor der zumindest näherungsweise instantanen oder adiabatischen Änderung der Temperatur des Mediums bestimmbar ist.

10. Temperatursensor nach einem der vorangehenden Ansprüche, **dadurch gekennzeichnet, dass** das Temperaturmesselement (20) einen Dünnschichtwiderstand, insbesondere in Form einer Leiterbahn aus Platin, Silizium, Aluminium oder Silizium-Germanium, eine pn-Diode, einen pn-Übergang oder ein Thermoelement mit einem ersten Material (13) und einem zweiten Material (14), die zumindest punktuell auf der Membran (12) mindestens einen Thermokontakt (11) miteinander bilden, aufweist.

11. Temperatursensor nach Anspruch 10, **dadurch gekennzeichnet, dass** das erste und das zweite Material (13, 14) aus der Gruppe Platin, Gold, den Bleitelluriden, Aluminium, Titan, Silizium oder Silizium-Germanium ausgewählt ist.

12. Temperatursensor nach Anspruch 9, **dadurch gekennzeichnet, dass** ein Teil einer auf dem Tragkörper (25) geführten Zuleitung zu dem Temperaturmesselement (20) das Messelement (18) bildet.
